# EUROPÄISCHE PATENTSCHRIFT

(11) **EP 3 132 858 B1**
(45) Veröffentlichungstag und Bekanntmachung des Hinweises auf die Patenterteilung: **31.10.2018**
(21) Anmeldenummer: 16177444.3
(22) Anmeldetag: 01.07.2016
(51) Int. Cl.: B05B 14/43, B01D 46/00, B01D 46/24, B01D 46/10

(54) **VORRICHTUNG ZUM ABSCHEIDEN VON OVERSPRAY UND OBERFLÄCHENBEHANDLUNGSANLAGE**
DEVICE FOR SEPARATING OVERSPRAY AND SURFACE TREATING INSTALLATION
DISPOSITIF D'ÉLIMINATION D'EXCÈS DE PULVÉRISATION ET INSTALLATION DE TRAITEMENT DE SURFACE

(30) Priorität: 30.07.2015 DE 102015009690
(43) Veröffentlichungstag der Anmeldung: 22.02.2017
(73) Patentinhaber: Eisenmann SE, 71032 Böblingen (DE)
(72) Erfinder:
(74) Vertreter: Ostertag & Partner Patentanwälte mbB

(56) Entgegenhaltungen:
- WO-A1-2016/116393
- WO-A2-2016/131436
- DE-A1-102013 001 982
- DE-A1-102013 222 301

## Beschreibung

Die Erfindung betrifft eine Vorrichtung zum Abscheiden von Overspray aus der mit Overspray beladenen Kabinenluft von Beschichtungsanlagen, insbesondere von Lackieranlagen, mit wenigstens einer Filtereinheit, durch welche mit Overspray beladene Kabinenluft leitbar ist und in welcher sich Overspray abscheidet. siehe hierzu WO 2016/131436 A2. Außerdem betrifft die Erfindung eine Anlage zur Oberflächenbehandlung von Gegenständen, insbesondere von Fahrzeugkarosserien, mit
a) einer Beschichtungskabine, durch welche ein Luftstrom geleitet werden kann, der entstehendes Overspray aufnimmt und abführt;
b) einer Abscheidevorrichtung, welcher dieser Luftstrom zuführbar ist und wo ein Großteil zumindest der Feststoffe aus dem Overspray abgeschieden wird.

Bei der manuellen oder automatischen Applikation von Lacken auf Gegenstände wird ein Teilstrom des Lackes, der im Allgemeinen sowohl Festkörper und/oder Bindemittel als auch Lösemittel enthält, nicht auf den Gegenstand appliziert. Dieser Teilstrom wird in der Fachwelt "Overspray" genannt. Im Weiteren wird Overspray immer im Sinne eines dispersen Systems, wie einer Emulsion oder Suspension oder einer Kombination daraus, verstanden. Der Overspray wird von dem Luftstrom in der Lackierkabine erfasst und einer Abscheidung zugeführt, sodass die Luft gegebenenfalls nach einer geeigneten Konditionierung wieder in die Beschichtungskabine zurückgeleitet werden kann.

Insbesondere bei Anlagen mit größerem Lackverbrauch, beispielsweise bei Anlagen zum Lackieren von Fahrzeugkarosserien, kommen in bekannter Weise bevorzugt Nassabscheidesysteme einerseits oder elektrostatisch arbeitende Trockenabscheider andererseits zum Einsatz. Bei bekannten Nassabscheidern wird verhältnismäßig viel Energie zur Umwälzung der erforderlichen, recht großen Wassermengen benötigt. Die Aufbereitung des Spülwassers ist durch den hohen Einsatz an Lack bindenden und entklebenden Chemikalien und durch die Lackschlammentsorgung kostenintensiv. Weiterhin nimmt die Luft durch den intensiven Kontakt mit dem Spülwasser sehr viel Feuchtigkeit auf, was im Umluftbetrieb wiederum einen hohen Energieverbrauch für die Luftaufbereitung zur Folge hat. Bei elektrostatisch arbeitenden Trockenabscheidern muss der Lack-Overspray kontinuierlich von den Abscheideflächen entfernt werden, was meist mit baulich recht aufwendigen Maßnahmen verbunden ist und entsprechend störanfällig sein kann. Zudem ist der Energieaufwand bei solchen Abscheidern verhältnismäßig hoch.

Als Alternative zu diesen Abscheidesystemen sind Vorrichtungen der eingangs genannten Art bekannt, bei welchen die Filtereinheit als austauschbare Baueinheit ausgebildet ist und nach Erreichen einer Grenzbeladung mit Overspray gegen eine unbeladene Filtereinheit ausgetauscht und entsorgt oder gegebenenfalls recycelt wird. Die Aufbereitung und/oder Entsorgung von derartigen Filtereinheiten kann energetisch und auch im Hinblick auf die erforderlichen Ressourcen verträglicher sein als der Aufwand bei einem Nassabscheider oder einer elektrostatisch arbeitenden Abscheidevorrichtung.

Solchen Filtereinheiten wird die mit Overspray beladene Kabinenluft zugeführt, welche die Filtereinheiten durchströmt und als weitgehend von Overspray befreite Abluft verlässt. Nachfolgend wird auch eine solche Abluft der Einfachheit halber als Kabinenluft oder als von Overspray befreite Kabinenluft bezeichnet.

Bei bekannten Abscheidevorrichtungen und Anlagen der eingangs genannten Art muss die Strömung der Kabinenluft zu einer Filtereinheit gesperrt werden, wenn diese ihre Grenzbeladung erreicht hat und ausgetauscht werden muss. Hierdurch wird jedoch die Filterwirkung der Vorrichtung in diesem Moment reduziert. Gegebenenfalls müssen zum gleichen Zeitpunkt mehrere vorhandene Filtereinheiten ausgetauscht und die zugehörigen Strömungswege gesperrt werden, so dass die verbleibende Filterwirkung der Vorrichtung unbefriedigend ist.

Es ist nun Aufgabe der Erfindung, eine Vorrichtung und eine Oberflächenbehandlungsanlage der eingangs genannten Art zu schaffen, welche diesen Gedanken Rechnung tragen.

Diese Aufgabe wird durch die Merkmale gemäß Anspruch 1 gelöst.

Erfindungsgemäß sind ein oder mehrere Filterelemente in einer Filtereinheit untergebracht, welche somit als Filteraufnahme dient, die strukturell nicht dazu gedacht ist, im Betrieb von der Abscheidevorrichtung entfernt zu werden. Lediglich die Filterelemente können ausgetauscht werden.

Vorzugsweise umfasst die Filtereinheit mehrere Filteraufnahmen für jeweils ein Filterelement. Insbesondere in diesem Fall ist es möglich, dass stets eine gleiche Anzahl von Filterelementen in einer Filterposition von mit Overspray beladender Kabinenluft durchströmt werden kann und ein beladenes Filterelement in der Wechselposition ausgetauscht werden kann. Auf diese Weise ändert sich die Filterwirkung der Vorrichtung auch während eines Austauschs eines oder mehrerer Filterelemente nicht.

Erfindungsgemäß ist die Filtereinheit um eine Drehachse verdrehbar gelagert.

Für einen guten Zugang zu einem Filterelement in der Filtereinheit ist die wenigstens eine Filteraufnahme bezogen auf die Drehachse aus radialer Richtung zugänglich.

Dabei ist die Filtereinheit bevorzugt zylindrisch ausgebildet sind, wobei die Drehachse axial zur Filtereinheit verläuft.

Strömungstechnisch ist es günstig, wenn das Filterelement einen Strömungseinlass aufweist, durch welchen mit Overspray beladene Kabinenluft in der Filterposition des Filterelements in bezogen auf die Drehachse radialer Richtung in das Filterelement einströmen kann. Auf diese Weise kann der radiale Zugang zur Filteraufnahme auch als Strömungszugang genutzt werden.

Dabei ist es von Vorteil, wenn das Filterelement die Form eines Kreiszylindersegments mit gekappter Spitze hat, wobei die Spitze einen Strömungsauslass und eine gegenüberliegende Fläche einen Strömungseinlass bereitstellt. Derartige Filterelemente können gut als Filterring aneinander gereiht werden, wobei ein zentraler Kanal verbleibt, über welchen die Kabinenluft abgeleitet werden kann, nachdem sie die Filterelemente durchströmt hat und dort von Overspray befreit wurde.

Eine effektive Filterwirkung wird erreicht, wenn mehrere Filtereinrichtungen mit jeweils wenigstens einer Filtereinheit vorhanden sind.

Vorzugsweise umfasst jede Filtereinrichtung wenigstens zwei Filtereinheiten.

Im Hinblick auf die Anlage wird die oben genannte Aufgabe dadurch gelöst, dass
c) die Abscheidevorrichtung mit einigen oder allen der oben genannten Merkmale ausgebildet ist.

Um die mit Overspray beladene Kabinenluft von der Umgebung abzuschotten ist es günstig, wenn ein Abscheideraum vorhanden ist, in welchen die mit Overspray beladene Kabinenluft leitbar ist und aus welchem die mit Overspray beladene Kabinenluft in ein oder mehrere Filterelemente in ihrer Filterposition einströmt.

Es ist ferner vorteilhaft, wenn ein Betriebsraum vorhanden ist, welcher durch eine Trennwand von dem Abscheideraum getrennt ist und von welchem ein Filterelement in seiner Wechselposition zugänglich ist. Auf diese Weise kann ein Austausch eines Filterelements in einer sicheren Umgebungsatmosphäre erfolgen.

Es ist günstig, wenn die Drehachse einer oder mehrerer Filtereinheiten vertikal oder horizontal verläuft. Ein Zugang zu den Filterelementen kann dann von der Seite oder von unten bzw. oben erfolgen.

Nachfolgend werden Ausführungsbeispiele der Erfindung anhand der Zeichnungen näher erläutert. In diesen zeigen:
- Figur 1: eine Lackierkabine mit einer Abscheidevorrichtung für Overspray gemäß einem ersten Ausführungsbeispiel in einer perspektivischen Ansicht, wobei die Abscheidevorrichtung in einem Abscheidebereich der Lackierkabine angeordnet ist;
- Figur 2: den Abscheidebereich der Lackierkabine mit der Abscheidevorrichtung von Figur 1 in einer Frontansicht und größerem Maßstab;
- Figur 3: einen Schnitt eines Abschnitts des Abscheidebereichs entlang der Schnittlinie III-III in Figur 2;
- Figuren 4A, 4B, 4C, 4D: den Aufbau von Filtereinheiten und Filterelementen der Abscheidevorrichtung;
- Figur 5: den Abscheidebereich der Lackieranlage mit einer Abscheidevorrichtung gemäß einem zweiten Ausführungsbeispiel;
- Figur 6: den Abscheidebereich der Lackieranlage mit einer Abscheidevorrichtung gemäß einem dritten Ausführungsbeispiel;
- Figur 7: den Abscheidebereich der Lackieranlage mit einer Abscheidevorrichtung gemäß einem vierten Ausführungsbeispiel;
- Figur 8: eine Längsansicht der Lackierkabine mit einer Abscheidevorrichtung gemäß einem fünften Ausführungsbeispiel.

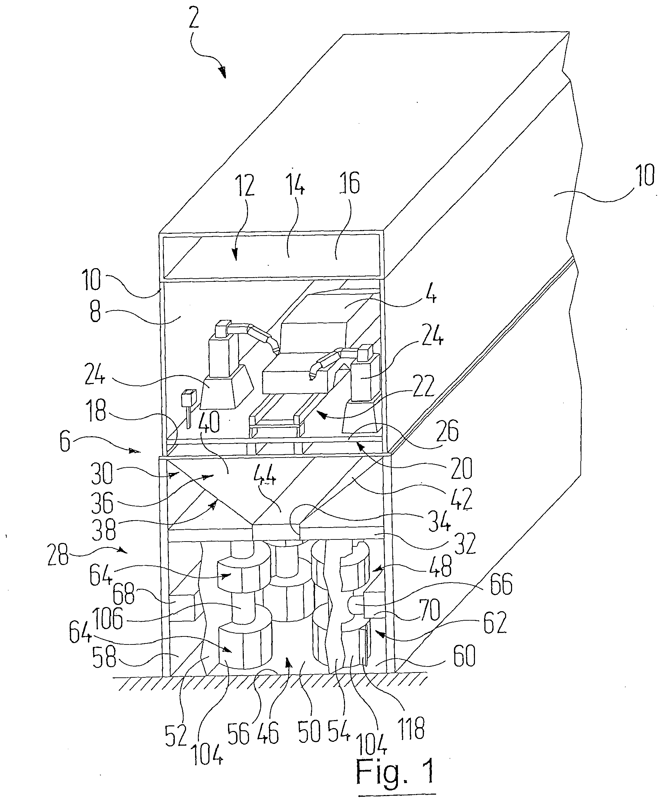

Zunächst wird auf Figur 1 eingegangen. Dort ist als Beispiel für eine Behandlungskabine mit 2 insgesamt eine Lackierkabine einer Oberflächenbehandlungsanlage bezeichnet, in welcher Gegenstände in Form von Fahrzeugkarosserien 4 lackiert werden, nachdem sie in nicht eigens gezeigten Vorbehandlungsstationen zum Beispiel gereinigt und entfettet wurden, welche der Lackierkabine 2 vorgelagert sind. Die Lackierkabine 2 ruht auf einem Stahlbau 6, wie es an und für sich bekannt ist.

Die Lackierkabine 2 umfasst einen oben angeordneten Lackiertunnel 8, welcher von vertikalen Seitenwänden 10 und einer horizontalen Kabinendecke 12 begrenzt, jedoch an den Stirnseiten offen ist. Darüber hinaus ist der Lackiertunnel 8 nach unten hin in der Weise offen, dass mit Overspray beladene Kabinenabluft nach unten aus dem Lackiertunnel 8 heraus strömen kann. Die Kabinendecke 12 ist in üblicher Weise als untere Begrenzung eines Luftzuführraumes 14 mit einer Filterdecke 16 ausgebildet.

Oberhalb einer unteren Öffnung 18 des Lackiertunnels 8 ist ein Stahlgerüst 20 angeordnet, welches eine an und für sich bekannte Fördertechnik 22 trägt, auf die hier nicht näher eingegangen wird. Mit dieser können zu lackierende Fahrzeugkarosserien 4 von der Eingangsseite des Lackiertunnels 8 zu dessen Ausgangsseite transportiert werden. Im Inneren des Lackiertunnels 8 befinden sich Applikationseinrichtungen in Form von mehrachsigen Applikationsrobotern 24, wie sie an und für sich bekannt sind. Mittels der Applikationsroboter 24 können die Fahrzeugkarosserien 4 mit Lack beschichtet werden.

Die untere Öffnung 18 des Lackiertunnels 8 ist durch einen begehbaren Gitterrost 26 abgedeckt. Unterhalb des Gitterrostes 26 befindet sich ein Anlagenbereich 28, in welchem die von der Kabinenluft mitgeführten Overspraypartikel von der Kabinenluft getrennt werden.

Aus dem Luftzuführraum 14 strömt also Luft nach unten durch den Lackiertunnel 8 hindurch zu dem Anlagenbereich 28, wobei die Luft im Lackiertunnel 8 vorhandenen Lack-Overspray aufnimmt und mit sich führt.

Der Anlagenbereich 28 umfasst einen Strömungsbereich 30, in den die mit Overspray beladene Kabinenluft zunächst einströmt und welcher hierzu nach oben zur Lackierkabine 2 hin offen, jedoch zur Seite von den Seitenwänden 10 und nach unten durch eine Zwischendecke 32 begrenzt ist. Die Zwischendecke 32 weist in Kabinenlängsrichtung einen Längsschlitz 34 auf.

In dem Strömungsbereich 30 gelangt die Kabinenluft zunächst in einen Leitkanal 36 einer Luftleiteinrichtung 38, welcher durch Leitbleche 40, 42 gebildet ist, die sich von den Seitenwänden 10 nach unten geneigt zu dem Längsschlitz 34 in der Zwischenwand 32 erstrecken. Der Leitkanal 36 mündet unten in einen Durchgangskanal 44, der sich durch den Längsschlitz 34 in der Zwischenwand 32 hindurch und nach unten bis zu einem Abscheidebereich 46 des Anlagenbereichs 28 erstreckt, in dem eine Abscheidevorrichtung 48 angeordnet ist, mit deren Hilfe der Overspray aus der mit Overspray beladenen Kabinenluft abgeschieden wird.

Der Abscheidebereich 46 umfasst einen Abscheideraum 50, welcher sich in Längsrichtung der Lackierkabine 2 erstreckt und seitlich durch zwei vertikale Trennwände 52, 54 begrenzt ist. Der Abscheideraum 50 ist außerdem unten durch einen Boden 56 und oben, abgesehen von dem offenen Durchgangskanal 44, durch die Zwischendecke 32 begrenzt. Auf diese Weise ist seitlich neben der Trennwand 52 ein Betriebsraum 58 und seitlich neben der Trennwand 54 eine Betriebsraum 60 ausgebildet. Die Betriebsräume 58, 60 erstrecken sich ebenfalls in Längsrichtung der Lackierkabine 2 und sind unten und oben durch den Boden 56 bzw. die Zwischendecke 32 und auf der von der jeweiligen Trennwand 52, 54 abliegenden Seite durch jeweils eine Seitenwand 10 der Lackierkabine 2 begrenzt.

Die Abscheidevorrichtung 48 umfasst mehrere baugleiche Filtereinrichtungen 62, von denen mehrere in Längsrichtung der Lackierkabine 2 entlang von beiden Trennwänden 52, 54 angeordnet sind und welche nun zunächst anhand der Figuren 1 bis 4 erläutert werden. In den Figuren sind der Übersichtlichkeit halber nicht immer alle Filtereinrichtungen 62 mit Bezugszeichen versehen.

Jede Filtereinrichtung 62 umfasst zwei drehbar gelagerte Filtereinheiten 64, welche von der mit Overspray beladenen Kabinenluft durchströmt werden und in denen sich Overspray abscheidet. Die von Overspray befreite Kabinenluft strömt aus den Filtereinheiten 64 in einen Verbindungskanal 66, welcher sich durch die jeweils zugehörige Trennwand 52 oder 54 hindurch erstreckt und in einen jeweiligen Sammelkanal 68 bzw. 70 mündet, von denen jeweils einer in den Betriebsräumen 58 bzw. 60 verläuft. Über die Sammelkanäle 68, 70 wird die gereinigte Kabinenluft einer weiteren Aufbereitung und Konditionierung zugeführt und im Anschluss daran in einem hier nicht eigens gezeigten Kreislauf wieder in den Luftzuführraum 14 geleitet, aus dem sie wieder von oben in den Lackiertunnel 8 einströmt. Falls die erhaltene Abluft durch die Filtereinrichtungen 62 noch nicht ausreichend von Overspraypartikeln befreit ist, können den Filtereinrichtungen 62 noch weitere Filterstufen nachgelagert sein, denen die Luft zugeführt wird und in denen beispielsweise Vliesfilter oder auch elektrostatisch arbeitende Abscheidefilter eingesetzt werden, wie sie an und für sich bekannt sind.

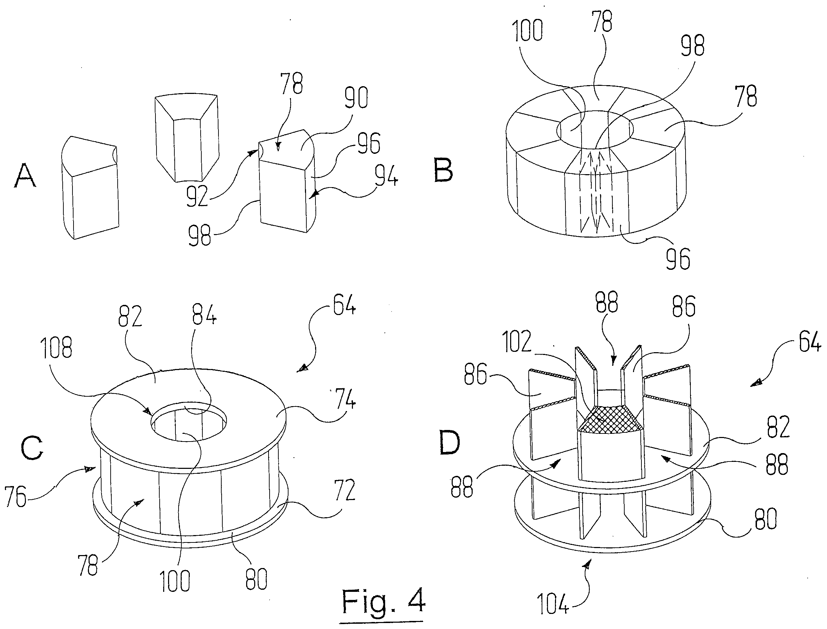

Wie Figur 4C veranschaulicht, weisen die Filtereinheiten 64 eine erste Lagerplatte 72 und eine zweite Lagerplatte 74 auf, die parallel zueinander verlaufen und zwischen sich einen Filteraufnahmebereich 76 definieren, in welchem mehrere, in Figur 4A einzeln gezeigte Filterelemente 78 aufgenommen sind. Die Lagerplatten 72 und 74 können als geschlossene Deckplatte 80 oder als Auslassplatte 82 mit einer koaxialen Auslassöffnung 84 ausgebildet sein, wie sie in Figur 4C zu erkennen ist, wobei stets wenigstens eine Auslassplatte 82 vorhanden ist. Wenn zwei Auslassplatten 82 vorhanden sind, sind deren Auslassöffnungen 84 koaxial zueinander angeordnet. Beim Ausführungsbeispiel nach den Figuren 1 bis 3 sind bei der Filtereinheit 64 je eine Deckplatte 80 und je eine Auslassplatte 82 vorhanden.

Der Filteraufnahmebereich 76 ist in Umfangsrichtung durch Zwischenwände 86 in Filteraufnahmen in Form von Filteraufnahmesegmenten 88 unterteilt, in denen jeweils ein Filterelement 78 aufgenommen werden kann, was nur in Figur 4D veranschaulicht ist. Die Zwischenwände 86 erstrecken sich in radialer Richtung von den Außenrändern der Lagerplatten 72 und 74 bis zu der Auslassöffnung 84 in der Auslassplatte 82. Bei den vorliegenden Ausführungsbeispielen sind jeweils acht Filteraufnahmesegmente 88 vorhanden, die Anzahl der Filteraufnahmesegmente 88 kann jedoch auch hiervon abweichen und größer oder kleiner sein.

Bei den vorliegenden Ausführungsbeispielen sind die Filtereinheiten 64 zylindrisch, wobei die die Lagerplatten 72, 74 eine kreisförmige Außenkontur haben. Die Aufnahmesegmente 88 folgen hierdurch entlang der jeweiligen Begrenzungen einem Kreiszylindersegment.

Die Filterelemente 78 sind zu den Filteraufnahmesegmenten 88 komplementär ausgebildet. Vorliegend sind die Filterelemente 78 als Kreiszylindersegmente 90 mit gekappter Spitze 92 ausgebildet; dort folgt die Außenkontur der Filterelemente 78 der Außenkontur der Auslassöffnung 84. Die Filterelemente 78 sind derart ausgebildet, dass sie auf der gegenüberliegenden Fläche 94 einen Strömungseinlass 96 und auf an der gekappten Spitze 92 einen Strömungsauslass 98 bieten, zwischen denen die Filterelemente 78 durchströmt werden können. In Figur 4B ist zu erkennen, dass die in Umfangsrichtung angeordneten Filterelemente 78 radial innen einen Strömungskanal 100 begrenzen, der sich koaxial zur Filtereinheit 64 erstreckt.

Die Filterelemente 78 umfassen ein oder mehrere unterschiedliche Filtermaterialien, wie beispielsweise ein Vliesmaterial oder dergleichen, welches zumindest bereichsweise durch ein Gehäuse 102 abgedeckt sein kann, von dem in Figur 4D eine Gehäusewand kreuzschraffiert angedeutet ist. In der Praxis deckt das Gehäuse 102 als Gehäusemantel alle Seiten außer der Spitze 92 und der Fläche 94 des Filterelements 78 ab und schließt das Filtermaterial ein. Die Gehäusewände liegen dann jeweils strömungsdicht an den Lagerplatten 72 bzw. 74 und den Zwischenwänden 86 an, wenn sich ein Filterelement 78 in einem Filteraufnahmesegment 88 befindet. Hierzu trägt das Gehäuse 102 Dichtmittel. Alternativ kann das Gehäuse auch die Spitze 92 und die Fläche 94 abdecken, muss dann jedoch den Strömungseinlass 96 und den Strömungsauslass 98 bereitstellen, beispielsweise durch eine Perforation oder ein Gitter oder dergleichen, so dass die Filterelemente 78 in radialer Richtung durchströmbar sind. Die Filterelemente 78 sind auf diese Weise als Filterkassette ausgebildet. Gegebenenfalls können die Filterelemente 78 auch nur durch das Filtermaterial selbst ohne Gehäuse 102 gebildet sein, welches dann entsprechende Dichtmittel tragen muss.

Der untere Bereich eines Filterelementes 78 kann von einer Sammelwanne umgeben sein, so dass flüssiger Overspray aufgefangen werden kann. Eine solche Sammelwanne kann beispielsweise durch eine Kunststofflage ausgebildet sein.

Die Filterelemente 78 können aus einem Material oder Materialien gefertigt sein oder Material oder Materialien umfassen, die recycelt werden können. Hierfür kommen vor allem nassfeste recyclingfähige Materialien in Frage, wie Papier- und Pappmaterialien, Karton, MDF-Material oder auch Holz. Auch Kunststoffe wie insbesondere Polyethylen oder Polypropylen sind geeignet. Grundsätzlich sind die Filterelemente 78 als Einweg-Filterelemente konzipiert, die nach ihrer Verwendung mit dem aufgenommenen Overspray entsorgt oder einem Recyclingprozess unterzogen werden können. Die Materialien können auch bereits recycelt sein, beispielsweise im Fall von recyceltem Altpapier oder dergleichen.

Bei einer Abwandlung können auch regenerierbare Filterelemente 78 verwendet werden. Beispielsweise können die Filterelemente 78 mit einem Filterhilfsmaterial versehen sein, welcher Overspray bindet und zusammen mit dem Overspray von dem Filterelement getrennt werden kann, so dass dieses nach einem Regenerationsprozess, bei dem es unter anderem erneut mit einem Filterhilfsmaterial versehen wird, wieder verwendet werden kann. Gegebenenfalls wird das Filterhilfsmaterial auch erst im Betrieb in die Filtereinheit 64 und die vorhandenen Filterelemente 78 eingebracht.

Ein solches Filterhilfsmaterial ist zum Beispiel ein Pulvermaterial, ist partikelförmig oder granulatförmig und/oder weist eine Faser- oder Hohlraumstruktur auf und kann zerstäubt oder vernebelt werden. Als Filterhilfsmaterial werden beispielsweise insbesondere Materialien verwendet, welche das Overspray entkleben und/oder Flüssigbestandteile des Oversprays aufnehmen oder binden können. Für diesen Zweck sind vor allem Kalk, Steinmehl, insbesondere Kalksteinmehl, Aluminiumsilikate, Aluminiumoxide, Siliziumoxide oder dergleichen bekannt. Darüber hinaus kann auch ein Reaktionshilfsstoff vorhanden sein oder eingebracht werden, mit dem vorhandener Overspray eine chemische oder physikalische Reaktion eingeht, wodurch der Overspray aushärtet. Hierunter ist auch lediglich eine Erhöhung der Viskosität zu verstehen, so dass Overspray in beispielsweise pastöser Form in den Filterelementen 78 aufgenommen ist.

Die Filtereinheiten 64 sind in radialer Richtung außen offen, so dass die Filteraufnahmesegmente 88 von radial außen zugänglich sind und ein Filterelement 78 jeweils in radiale Richtung mit der Spitze 92 voran in ein Filteraufnahmesegment 88 eingeschoben und auch wieder aus einem Filteraufnahmesegment 88 entnommen werden kann und zudem in radialer Richtung vom Strömungseinlass 96 zum Strömungsauslass 98 durchströmt werden kann.

Figur 4D, welche die Anordnung der Zwischenwände 86 und der Filteraufnahmesegmente 88 veranschaulicht, zeigt außerdem als Abwandlung eine Filtereinheit 64 als Filter-Baugruppe 104, welche zwei aneinander angrenzend angeordnete Filteraufnahmebereiche 76 umfasst, zwischen denen eine Auslassplatte 82 angeordnet ist, wobei an der Oberseite die ebenfalls vorhandene Auslassplatte 82 nicht gezeigt ist. Auf diese Weise ist eine Art Filterturm ausgebildet. Eine solche Filter-Baugruppe 104 ist in Figur 1 bei den Filtereinrichtungen 62jeweils am Boden 56 gezeigt.

Die beiden Filtereinheiten 64 sind in einem Abstand voneinander so angeordnet, dass ihre Auslassplatten 82 horizontal verlaufen und aufeinander zuweisen, so dass sie sich gegenüberliegen. Zwischen den Auslassöffnungen 84 erstreckt sich eine drehfeste, vertikal verlaufende Strömungsleitung 106, von der ihrerseits der Verbindungskanal 66 zum jeweiligen Sammelkanal 68 bzw. 70 abzweigt, so das ein T-Stück gebildet ist. Die Strömungsleitung 106 ist an ihren entgegengesetzten Enden strömungsdicht mit der Auslassöffnung 84 jeweils einer Filtereinheit 64 verbunden, wobei die Filtereinheiten 64 bezogen auf die Strömungsleitung 106 verdrehbar gelagert sind. Für die Dichtung sind Schleifdichtungen 108 zwischen den Auslassöffnungen 84 der Auslassplatten 82 und der Strömungsleitung 106 vorhanden.

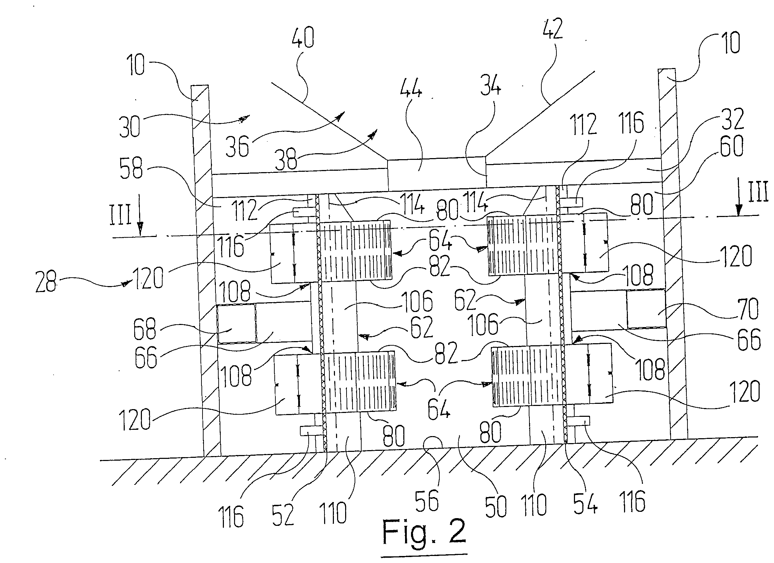

Wie in Figur 2 zu erkennen ist, ist diejenige Filtereinheit 64, die unten angeordnet ist, ist mit Hilfe einer ersten Lagereinrichtung 110 am Boden 56 drehbar gelagert, wogegen diejenige Filtereinheit 64, welche oben angeordnet ist, mit Hilfe einer zweiten Lagereinrichtung 112 an der Zwischendecke 32 drehbar gelagert ist. In Abwandlung gegenüber Figur 1 sind in Figur 2 die Filtereinheiten 64 am Boden 56 nicht als Filter-Baugruppe 104 mit zwei Filteraufnahmebereichen 76 gezeigt, sondern als Filtereinheiten 64 gemäß Figur 4C.

Die Drehachsen der Filtereinheiten 64 sind mit 114 bezeichnet und verlaufen vertikal und koaxial zu den Auslassöffnungen 84 der Filtereinheiten 64. Jede Filtereinheit 64 ist mit einem eigenen Antriebsmotor 116 gekoppelt, so dass die Filtereinheiten 64 unabhängig voneinander um ihre Drehachse verdreht werden können.

Die Antriebsmotoren 116 können elektrisch, hydraulisch oder pneumatisch arbeiten.

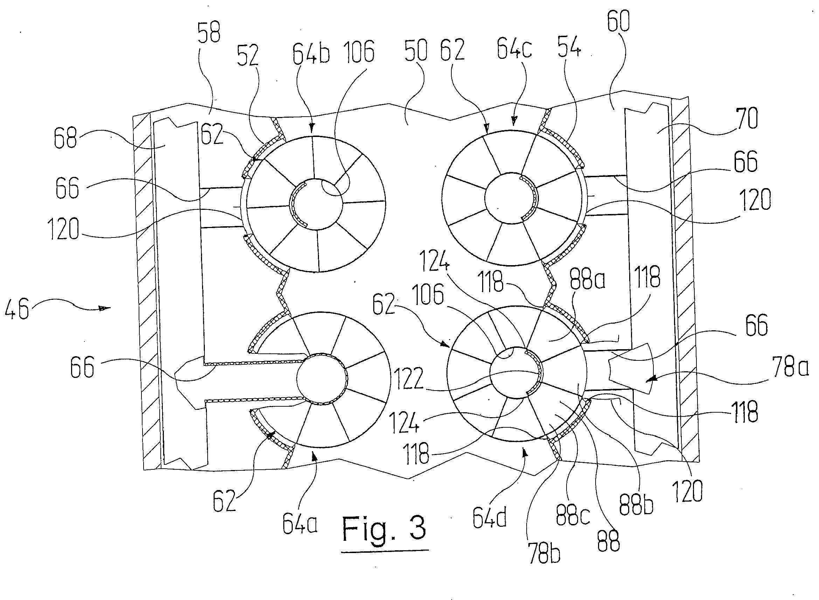

In Figur 1 ist die Trennwand 54 und in Figur 2 sind beide Trennwände 52, 54 teilweise weggebrochen gezeigt, so dass die Filtereinheiten 64 zu erkennen sind und nicht von den Trennwänden 52 bzw. 54 verdeckt werden. Die Trennwände 52, 54 folgen jedoch der Außenkontur der Filtereinrichtungen 62 mit den Filtereinheiten 64 und der Strömungsleitung 106 derart, dass die Filtereinrichtungen 62 vollständig im Abscheideraum 50 angeordnet sind, wobei bei einer entsprechenden Drehlage der Filtereinheit 64 wenigstens drei aufeinanderfolgende Filteraufnahmesegmente 88 in Positionen 88a, 88b, 88c der Filtereinheiten 64 von der Trennwand 52 bzw. 54 umgeben sind, wie es Figur 3 veranschaulicht.

Dort ist ein Abschnitt des Abscheidebereichs 46 zu sehen ist, in dem vier Filtereinrichtungen 62 angeordnet ist, deren zu erkennende Filtereinheiten mit 64a, 64b, 64c und 64d bezeichnet sind. Die genannten drei Filteraufnahmesegmente 88 in den Positionen 88a, 88b, 88c sind bei der in Figur 3 unten rechts angeordneten Filtereinheit 64d mit Bezugszeichen versehen. In Umfangsrichtung tragen die Trennwände 52, 54jeweils vertikale Dichtlippen 118, welche in den Abscheideraum 50 weisen und in Umfangsrichtung in einem solchen Abstand angeordnet sind, dass bei einer entsprechenden Drehlage der Filtereinheit 64jeweils eine Zwischenwand 86 des Filteraufnahmebereiches 76 mit ihrem vertikalen Außenrand gegen ein Dichtlippe 118 strömungsdichtend anliegt. Statt einer physischen Dichtung können auch offene Spalte zwischen den Trennwänden 52, 54 und den Filtereinheiten 64 verbleiben, wenn die Betriebsräume 58 und 60 mit einem geringen Überdruck beaufschlagt sind. Auf diese Weise wird dann verhindert, dass Kabinenluft aus dem Abscheideraum 50 in die Betriebsräume 58, 60 einströmen kann.

Auf Höhe der jeweiligen Filtereinheiten 64 und vor dem bezogen auf die drei Positionen 88a, 88b, 88c mittleren Filteraufnahmesegment 88 in der Position 88b weisen die Trennwände 52, 54jeweils eine Tür 120 auf, so dass der Zugang vom Betriebsraum 58 oder 60 zu der hinter der Tür 120 liegenden Filtereinheit 64 versperrt oder gewährt werden kann. In Figur 2 sind alle Türen 120 geöffnet, in Figur 3 sind zwei Türen 120 geschlossen und eine Tür 120 geöffnet gezeigt. Gegebenenfalls kann auch auf Türen 120 verzichtet werden, so dass dort lediglich offene Durchgänge in den Trennwänden 52, 54 vorgesehen sind.

Wie Figur 3 ebenfalls veranschaulicht, erstreckt sich zwischen den Lagerplatten 72 und 74 jeder Filtereinheit 64 drehfest ein kreisbogenförmiges Wandsegment 122, welches die Strömungsauslässe 98 von den Filterelementen 78 abdeckt, die in den Filteraufnahmesegmenten 88a, 88b, 88c angeordnet sind. Die Wandsegmente 122 können beispielsweise an den Enden der Strömungsleitung 106 befestigt sein. Ein solches Wandsegment 122 trägt ebenfalls achsparallel verlaufende Dichtlippen 124, die in Umfangsrichtung in einem solchen Abstand angeordnet sind, dass bei einer entsprechenden Drehlage der Filtereinheit 64 jeweils die in Umfangsrichtung äußeren Zwischenwände 86 der Filteraufnahmesegmente 88a und 88c des Filteraufnahmebereiches 76 mit ihrem vertikalen Außenrand gegen jeweils eine Dichtlippe 124 strömungsdichtend anliegen.

Die Filtereinheiten 64 können auch Komponenten für einen Brandschutz mit sich führen, durch welche Löschmittel unmittelbar in den Filteraufnahmebereich 76 eingebracht werden können.

Die oben erläuterte Abscheidevorrichtung 48 funktioniert nun wie folgt:
Als Ausgangssituation wird angenommen, dass die Filteraufnahmesegmente 88 der Filtereinheiten 64 der Filtereinrichtungen 62 mit frischen, d.h. unbeladenen Filterelementen 78 bestückt sind. Im Betrieb der Lackierkabine 2 gelangt die mit Overspray beladene Kabinenluft über die Luftleiteinrichtung 38 in den Abscheideraum 50. Dort strömt die mit Overspray beladene Kabinenluft durch die Strömungseinlässe 96 der Filterelemente 78, die dem Abscheideraum 50 zugewandt sind, in die Filtereinheiten 64 ein und durchströmt dort die Filterelemente 78. Die dem Abscheideraum 50 zugewandten Filterelemente 78 bilden somit einen wirksamen Filterteil der Filtereinheit 64, wobei die Strömungseinlässe 96 dieser Filterelemente 78 den Strömungsleinlass der Filtereinheit 64 für die mit Overspray beladene Kabinenluft bereitstellen. Die Positionen der dem Abscheideraum 50 zugewandten Filterelemente 78 definieren Filterpositionen der Filterelemente 78, in welcher die Filterelemente 78 von mit Overspray beladener Kabinenluft durchströmbar sind.
In diesen Filterelementen 78 scheidet sich der Overspray ab und die von Overspray befreite Kabinenluft gelangt in den inneren Strömungskanal 100 der Filtereinheiten 64, von wo sie weiter auf dem Wege über die Strömungsleitung 106 und den Verbindungskanal 66 zum Sammelkanal 68 bzw. 70 strömt.

Im laufenden Betrieb nehmen die Filterelemente 78 Overspray bis zu einer Grenzbeladung auf, bei welcher die Filterwirkung erschöpft ist und ein entsprechendes Filterelement 78 ausgetauscht werden muss.

Die Filtereinheiten 64 werden mittels der Antriebsmotoren 116 intermittierend um ihre jeweilige Drehachse 114 verdreht und dabei jeweils um ein Filteraufnahmesegment 88 im Kreis bewegt. Die Filterelemente 78 durchlaufen die Positionen 88a zu 88b zu 88c und über den Abscheideraum 50 wieder zu 88a. Diejenigen Filterelemente 78, die sich in den Positionen 88a, 88b und 88c befinden, werden nicht von der mit Overspray beladenen Kabinenluft durchströmt.

Die Taktzahl ist darauf abgestimmt, dass die Filterelemente 78 vor Erreichen ihrer Grenzbeladung in die Position 88a gelangen. Der Beladungszustand der Filtereinheiten 64 kann beispielsweise mittels einer Differenzdruckbestimmung überwacht werden. Je größer die Beladung des Filtermoduls 48 ist, desto größer ist der durch das Filtermodul 48 aufgebaute Luftwiderstand, was über eine Messung zum Beispiel in den Verbindungskanälen 66 erfasst werden kann.

Die Position 88a definiert eine Trocken- oder Abdunstposition für das Filterelement 78. Bei dem nächsten Drehtakt gelangt das Filterelement 78 aus der Position 88a in die Position 88b, welche eine Wechselposition definiert. Die Tür 120 wird nun geöffnet und das mit Overspray beladene Filterelement 78 wird entnommen; ein solches verbrauchtes Filterelement 78 ist in Figur 3 mit 78a bezeichnet.

Das nun leere Filteraufnahmesegment 88 in der Position 88b wird mit einem unverbrauchten, leeren Filterelement 78b bestückt, die Tür 120 wird wieder geschlossen und die Filtereinheit 64 um einen weiteren Drehtakt verdreht, so dass das leere Filterelement 78b sich nun in der Position 88c befindet. Dabei gelangt das zuvor in der Trocken- und Abdunstposition 88a befindliche Filterelement 78 in die Wechselposition 88b vor der Tür 120 und wird nun seinerseits gegen ein leeres Filterelement 78 ausgetauscht.

Allgemein ausgedrückt ist die Filtereinheit 64 also derart beweglich gelagert, dass ein Filterelement 78 zwischen wenigstens einer Filterposition, in welcher das Filterelement 78 von mit Overspray beladener Kabinenluft durchströmbar ist, und einer Wechselposition 88b bewegbar ist, in welcher das Filterelement 78 aus der zugehörigen Filteraufnahme 88 entnehmbar und gegen ein weiteres Filterelement 78 austauschbar ist.

Beim nächsten Drehtakt gelangt das leere Filterelement 78b in den Abscheideraum 50 und kann von mit Overspray beladener Kabinenluft durchströmt werden, bis es nach weiteren Drehtakten die Trocken- und Abdunstposition 88a erreicht.

Bei jedem Drehtakt wird also das sich jeweils in der Wechselposition 88b befindliche verbrauchte Filterelement 78a gegen ein leeres Filterelement 78b ausgetauscht.

Während der Bewegung durch den Abscheideraum 50 wird die Filterwirkung der Filterelemente 78, die sich der Trocken- und Abdunstposition 88a nähern, geringer, was aber durch die in Bewegungsrichtung nachfolgenden Filterelemente 78 kompensiert wird. Die Drehgeschwindigkeit bzw. die Taktrate ist dabei so abgestimmt, dass jede Filtereinheit 64 stets eine ausreichende Abscheidewirkung gewährleistet.

Alternativ können die Filtereinheiten 64 auch kontinuierlich verdreht werden und lediglich für den Wechselvorgang in ihrer Drehlage angehalten werden.

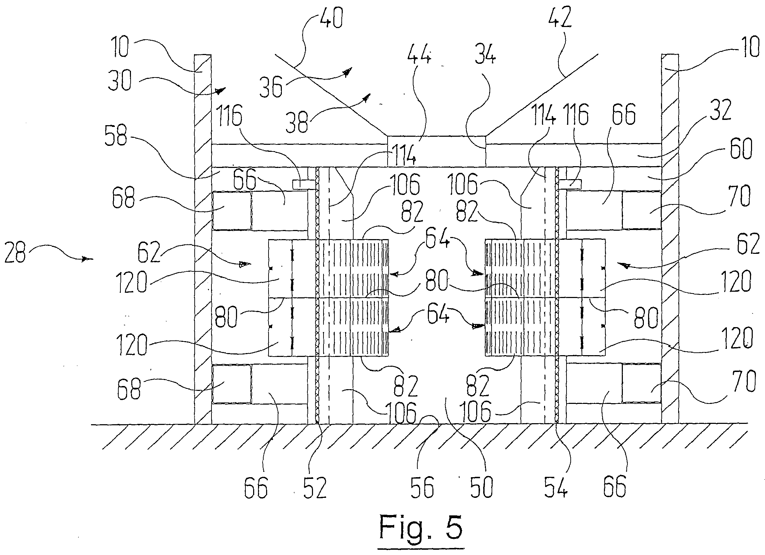

In Figur 5 ist nun als zweites Ausführungsbeispiel eine Abscheidevorrichtung 48 gezeigt, bei welcher die Filtereinrichtungen 62 jeweils zwei Filtereinheiten 64 umfassen, die so angeordnet sind, dass ihre Deckplatten 80 aneinander anliegen und ihre Auslassplatten 82 in entgegengesetzte Richtungen weisen. Die Filtereinrichtungen 62 umfassen in diesem Fall zwei Strömungsleitungen 106, welche sich von den jeweiligen Auslassöffnungen 84 der Filtereinheiten 64 nach oben und unten erstrecken und zu jeweils einem Verbindungskanal 66 führen, von denen jeder in jeweils einen eigenen Sammelkanal 68 bzw. 70 mündet. Bei diesem Ausführungsbeispiel sind in den Betriebsräumen 58 und 60 also jeweils zwei Sammelkanäle 68 bzw. 70 vorhanden.

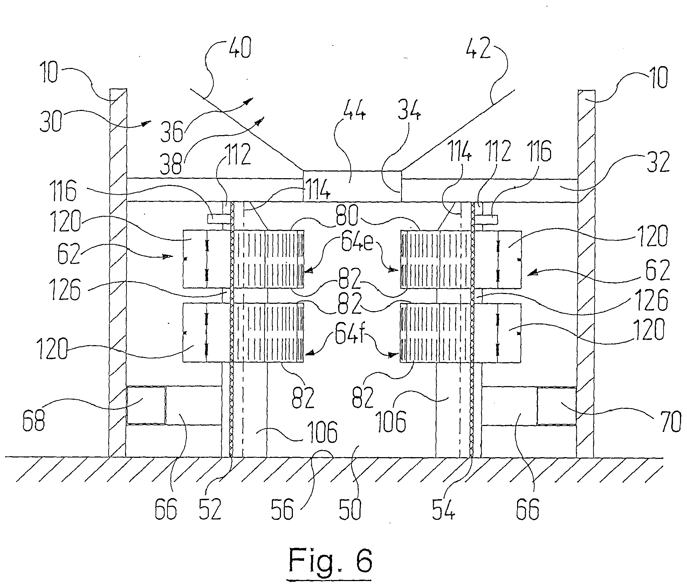

Figur 6 zeigt als drittes Ausführungsbeispiel eine Abscheidevorrichtung 48, bei welcher die Filtereinrichtungen 62jeweils zwei Filtereinheiten 64 umfassen. Eine erste, mit 64e bezeichnete Filtereinheit umfasst eine Deckplatte 80 und eine Auslassplatte 82, wobei deren Auslassöffnung 84 über ein Leitungsstück 126 strömungstechnisch mit der zweiten Filtereinheit verbunden ist, die das Bezugszeichen 64f trägt. Diese weist zwei Auslassplatten 82 auf und ist auf der von der ersten Filtereinheit 64e abliegenden Seite mit der Strömungsleitung 106 verbunden, die zum Verbindungskanal 66 führt.

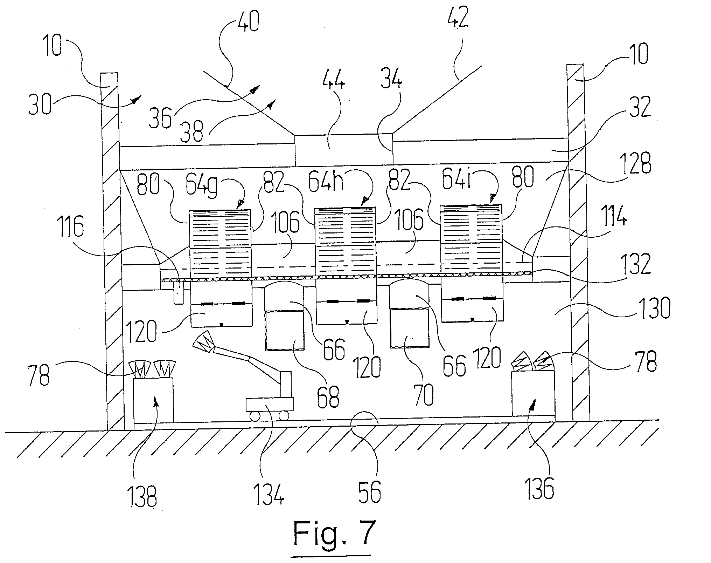

Figur 7 zeigt als viertes Ausführungsbeispiel eine Abscheidevorrichtung 48 in eine um 90° gedrehten Konfiguration, bei welcher die Drehachsen 114 der Filtereinheiten 64 horizontal verlaufen. Dort ist ein Abscheideraum 128 oberhalb von einem einzigen vorhandenen Betriebsraum 130 angeordnet, die durch eine horizontal ausgerichtete Trennwand 132 voneinander getrennt sind. Dort sind drei Filtereinheiten 64g, 64h und 64i in Richtung quer zur Lackierkabine 3 nebeneinander angeordnet. Die Türen 120 sind entsprechend ebenfalls horizontal ausgerichtet. Die dort mittlere Filtereinheit 64h weist zwei Auslassplatten 82 auf und ist über Strömungsleitungen 106 zu beiden Seiten strömungstechnisch mit den beiden anderen Filtereinheiten 64g und 64i verbunden. Diese weisen auf der jeweiligen Außenseite eine Deckplatte 80 auf. Die Strömungsleitungen 106 sind über jeweils einen Verbindungskanal 66 mit jeweils einem Sammelkanal 68 bzw. 70 verbunden. Im Betriebsraum 130 befindet sich ein Wechselroboter 134, mit dessen Hilfe ein Austausch von Filterelementen 78 automatisiert erfolgen kann. Der Wechselroboter 134 kann aus einer Filtereinheit 64g, 64h oder 64i entnommene, verbrauchte und mit Overspray beladene Filterelemente 78 an einer Sammelstelle 136 ablegen und von einem Entnahmelager 138 unverbrauchte Filterelemente 78 aufnehmen, mit denen die Filtereinheiten 64g, 64h oder 64i bestückt werden können.

Ein derartiger automatisierter Wechselvorgang kann auch bei den anderen Ausführungsbeispielen durchgeführt werden.

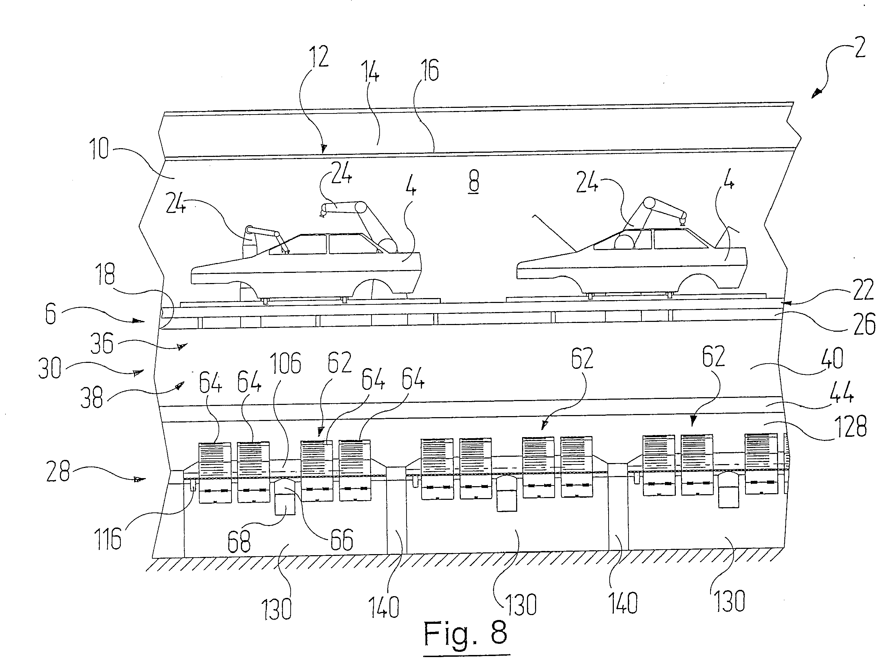

Figur 8 zeigt als fünftes Ausführungsbeispiel eine Abwandlung bei dem horizontalen Abscheideraum 128, bei welcher die Filtereinheiten 64 in Längsrichtung der Lackierkabine 2 angeordnet sind. Dabei sind mehrere Betriebsräumen 130 in dieser Längsrichtung aufeinanderfolgend vorhanden, die durch vertikale Wände 140 voneinander abgetrennt sind.

Jeweils zwei Filtereinheiten 64 bilden dort einen der Figur 6 entsprechenden Aufbau, wobei die Strömungsleitung 106 zwei solche Aufbauten verbindet und diese über einen Verbindungskanal 66 mit einem Sammelkanal 68 verbindet. Die Komponenten sind nur bei der in Figur 8 linken Filtereinrichtung 62 mit Bezugszeichen versehen.

Bei allen oben erläuterten Ausführungsbeispielen werden die Filterelemente 78 in den Filtereinheiten 64 in radialer Richtung durchströmt. Bei nicht eigens gezeigten Abwandlungen können die Filterelemente 78 auch axial durchströmt werden bzw. kann Kabinenluft zumindest in axialer Richtung in die Filterelemente 78 einströmen. Zumindest der Strömungseinlass 96 eines Filterelements 78 ist dann an der Ober- oder Unterseite des Kreiszylindersegments 90 ausgebildet. Die Filtereinheit 64 umfasst dann in Umfangsrichtung eine radiale Gehäusewand und die Lagerplatten 72 bzw. 74 haben dann Strömungsdurchgänge, die in ihrer Anordnung und Geometrie komplementär zu dem Strömungseinlass 96 an der Oberseits oder Unterseite des Filterelements 78 sind.

Wenn die Filterelemente 78 auf der Ober- oder Unterseite den Strömungseinlass 96 und auf der gegenüberliegenden Unter- bzw. Oberseite den Strömungsauslass 98 haben, kann die Filtereinheit 64 beispielsweise als um ihre Längsachse verdrehbare Filtertonne konzipiert sein, in der mehrere Lagen mit Filterelementen 78 angeordnet sind, die dann zum Beispiel aufeinanderfolgend durchströmt werden und so unterschiedliche Filterstufen ausbilden können.

Bei ebenfalls nicht eigens gezeigten Abwandlungen kann die Entnahme und Beschickung der Filtereinheiten nicht in bezogen auf die Filtereinheit 64 radialer, sondern in axialer Richtung erfolgen. In diesem Fall weisen die Trennwände 52, 54 beispielsweise Abschnitte auf, welcher der Außenkontur der Filtereinheiten 64 folgen und einen flächigen Bereich haben, der die Lagerplatte 72 bzw. 74 abdeckt. Wenn diese entsprechende Ausnehmungen haben und auch die Trennwand in dem genannten flächigen Bereich eine entsprechende Öffnung hat, kann ein Filterelement 78 darüber aus der Filtereinheit 64 entnommen bzw. in die Filtereinheit 64 eingesetzt werden. Die Öffnung kann wieder durch eine Tür verschließbar sein.

## Patentansprüche

1. Vorrichtung zum Abscheiden von Overspray aus der mit Overspray beladenen Kabinenluft von Beschichtungsanlagen, insbesondere von Lackieranlagen, mit wenigstens einer Filtereinheit (64), durch welche mit Overspray beladene Kabinenluft leitbar ist und in welcher sich Overspray abscheidet,
wobei
a) die Filtereinheit (64) einen Filteraufnahmebereich (76) umfasst, der in Umfangsrichtung durch Zwischenwände (86) in Filteraufnahmesegmente (88) unterteilt ist, welche jeweils mit einem austauschbaren Filterelement (78) bestückbar sind, welches einen Filtereinlass (96) und einen Filterauslass (98) aufweist;
b) wenigstens ein Filteraufnahmesegment (88) bezogen auf die Drehachse (114) aus radialer Richtung zugänglich ist;
c) die Filtereinheit (64) derart um eine Drehachse (114) verdrehbar gelagert ist, dass die Filterelemente (78) zwischen wenigstens einer Filterposition, in welcher das Filterelement (78) von mit Overspray beladener Kabinenluft durchströmbar ist, und einer Wechselposition (88b) bewegbar sind, in welcher das Filterelement (78) aus dem aus radialer Richtung zugänglichen Filteraufnahmesegment (88) entnehmbar und gegen ein weiteres Filterelement (78) austauschbar ist;
**dadurch gekennzeichnet, dass**
d) ein drehfestes Wandsegment (122) vorhanden ist, welches Strömungsauslässe (98) von Filterelementen (78) abdeckt, die in dem aus radialer Richtung zugänglichen Filteraufnahmesegment (88b) und in an dieses angrenzenden Filteraufnahmesegmenten (88a, 88c) angeordnet sind.

2. Vorrichtung nach Anspruch 1, **dadurch gekennzeichnet, dass** die Filtereinheit (64) zylindrisch ausgebildet sind und die Drehachse (114) axial zur Filtereinheit (64) verläuft.

3. Vorrichtung nach einem der Ansprüche 1 oder 2, **dadurch gekennzeichnet, dass** das Filterelement (78) einen Strömungseinlass (96) aufweist, durch welchen mit Overspray beladene Kabinenluft in der Filterposition des Filterelements (78) in bezogen auf die Drehachse (114) radialer Richtung in das Filterelement (78) einströmen kann.

4. Vorrichtung nach einem der Ansprüche 1 bis 3, **dadurch gekennzeichnet, dass** das Filterelement (78) die Form eines Kreiszylindersegments (90) mit gekappter Spitze (92) hat, wobei die Spitze (92) einen Strömungsauslass (98) und eine gegenüberliegende Fläche (94) einen Strömungseinlass (96) bereitstellt.

5. Vorrichtung nach einem der Ansprüche 1 bis 4, **dadurch gekennzeichnet, dass** mehrere Filtereinrichtungen (62) mit jeweils wenigstens einer Filtereinheit (64) vorhanden sind.

6. Vorrichtung nach Anspruch 5, **dadurch gekennzeichnet, dass** jede Filtereinrichtung (62) wenigstens zwei Filtereinheiten (64) umfasst.

7. Anlage zur Oberflächenbehandlung von Gegenständen, insbesondere von Fahrzeugkarosserien (4), mit
a) einer Beschichtungskabine (2), durch welche ein Luftstrom geleitet werden kann, der entstehendes Overspray aufnimmt und abführt;
b) einer Abscheidevorrichtung (48), welcher dieser Luftstrom zuführbar ist und wo ein Großteil zumindest der Feststoffe aus dem Overspray abgeschieden wird,
**dadurch gekennzeichnet, dass**
c) die Abscheidevorrichtung (48) nach einem der Ansprüche 1 bis 6 ausgebildet ist.

8. Anlage nach Anspruch 7, **dadurch gekennzeichnet, dass** ein Abscheideraum (50) vorhanden ist, in welchen die mit Overspray beladene Kabinenluft leitbar ist und aus welchem die mit Overspray beladene Kabinenluft in ein oder mehrere Filterelemente (78) in ihrer Filterposition einströmt.

9. Anlage nach Anspruch 8, **dadurch gekennzeichnet, dass** wenigstens ein Betriebsraum (58, 60) vorhanden ist, welcher durch eine Trennwand (52, 54) von dem Abscheideraum (50) getrennt ist und von welchem ein Filterelement (78) in seiner Wechselposition zugänglich ist.

10. Anlage nach einem der Ansprüche 7 bis 9, **dadurch gekennzeichnet, dass** die Drehachse (114) einer oder mehrere Filtereinheiten (64) vertikal oder horizontal verläuft.

## Claims

1. Apparatus for separating overspray from the cabin air, charged with overspray, of coating installations, in particular of painting installations, having at least one filter unit (64), through which cabin air charged with overspray is able to be passed and in which overspray is separated,
wherein
a) the filter unit (64) comprises a filter receptacle region (76) which is subdivided in the circumferential direction by intermediate walls (86) into filter receptacle segments (88) which are each able to be fitted with an exchangeable filter element (78) which has a filter inlet (96) and a filter outlet (98);
b) at least one filter receptacle segment (88) is accessible from a radial direction with respect to the axis of rotation (114),
c) the filter unit (64) is mounted so as to be rotatable about an axis of rotation (114) such that the filter elements (78) are movable between at least one filtering position, in which the filter element (78) is capable of being passed through by cabin air charged with overspray, and a replacement position (88b), in which the filter element (78) is removable from the filter receptacle segment (88) that is accessible from the radial direction, and is exchangeable for a further filter element (78),
**characterized in that**
d) a rotationally fixed wall segment (122) is provided, which covers flow outlets (98) of filter elements (78) that are arranged in the filter receptacle segment (88b) that is accessible from the radial direction and are arranged in filter receptacle segments (88a, 88c) adjoining the latter.

2. Apparatus according to Claim 1, **characterized in that** the filter unit (64) is formed in a cylindrical manner and the axis of rotation (114) extends axially with respect to the filter unit (64).

3. Apparatus according to either of Claims 1 and 2, **characterized in that** the filter element (78) has a flow inlet (96), through which cabin air charged with overspray can flow into the filter element (78) in a radial direction with respect to the axis of rotation (114), in the filtering position of the filter element (78).

4. Apparatus according to one of Claims 1 to 3, **characterized in that** the filter element (78) is in the form of a circular cylinder segment (90) with a cut-off tip (92), wherein the tip (92) provides a flow outlet (98) and an opposite face (94) provides a flow inlet (96).

5. Apparatus according to one of Claims 1 to 4, **characterized in that** a plurality of filter devices (62) each having at least one filter unit (64) are provided.

6. Apparatus according to Claim 5, **characterized in that** each filter device (62) comprises at least two filter units (64).

7. Installation for the surface treatment of articles, in particular of vehicle bodies (4), having
a) a coating cabin (2) through which an air flow can be passed that picks up and carries away overspray that arises;
b) a separating apparatus (48), to which this air flow is able to be fed and where the majority of at least the solids are separated from the overspray,
**characterized in that**
c) the separating device (48) is formed in accordance with one of Claims 1 to 6.

8. Installation according to Claim 7, **characterized in that** a separating chamber (50) is provided, into which the cabin air charged with overspray is able to be passed and from which the cabin air charged with overspray flows into one or more filter elements (78) in their filtering position.

9. Installation according to Claim 8, **characterized in that** at least one operating chamber (58, 60) is provided, which is separated from the separating chamber (50) by a partition wall (52, 54) and from which a filter element (78) is accessible in its replacement position.

10. Installation according to one of Claims 7 to 9, **characterized in that** the axis of rotation (114) of one or more filter units (64) extends vertically or horizontally.

## Revendications

1. Dispositif pour séparer un excédent de pulvérisation d'avec l'air, chargé d'excédent de pulvérisation, de cabines d'installations de revêtement et notamment d'installations de laquage, comportant au moins une unité de filtration (64) pouvant être parcourue par de l'air de cabines chargé d'excédent de pulvérisation, et dans laquelle de l'excédent de pulvérisation se sépare,
sachant
a) que l'unité de filtration (64) inclut une zone (76) de réception de filtres scindée par des cloisons intermédiaires (86), dans la direction périphérique, en des segments (88) récepteurs de filtres pouvant être garnis, respectivement, d'un élément filtrant remplaçable (78) muni d'une entrée de filtration (96) et d'une sortie de filtration (98) ;
b) qu'au moins un segment (88) récepteur de filtres est accessible depuis une direction radiale, par rapport à l'axe de rotation (114) ;
c) que ladite unité de filtration (64) est montée rotative autour d'un axe de rotation (114), de façon telle que les éléments filtrants (78) soient mobiles entre au moins un emplacement de filtration, auquel l'élément filtrant (78) peut être parcouru par de l'air de cabines chargé d'excédent de pulvérisation, et un emplacement d'échange auquel ledit élément filtrant (78) peut être enlevé du segment (88) récepteur de filtres, accessible depuis la direction radiale, et être remplacé par un autre élément filtrant (78) ;
**caractérisé par**
d) la présence d'un segment de paroi (122) à verrouillage rotatif, recouvrant des sorties d'écoulement (98) d'éléments filtrants (78) logés dans le segment (88b) récepteur de filtres, accessible depuis la direction radiale, et dans des segments (88a, 88c) récepteurs de filtres qui sont limitrophes dudit segment.

2. Dispositif selon la revendication 1, **caractérisé par le fait que** l'unité de filtration (64) est de réalisation cylindrique, l'axe de rotation (114) s'étendant axialement par rapport à ladite unité de filtration (64).

3. Dispositif selon l'une des revendications 1 ou 2, **caractérisé par le fait que** l'élément filtrant (78) comporte une entrée d'écoulement (96) par l'intermédiaire de laquelle de l'air de cabines, chargé d'excédent de pulvérisation, peut affluer dans l'élément filtrant (78) à l'emplacement de filtration dudit élément filtrant (78), dans une direction radiale par rapport à l'axe de rotation (114).

4. Dispositif selon l'une des revendications 1 à 3, **caractérisé par le fait que** l'élément filtrant (78) revêt la forme d'un segment cylindrique droit (90) à pointe (92) tronquée, sachant que ladite pointe (92) procure une sortie d'écoulement (98) et qu'une surface (94), pointant à l'opposé, procure une entrée d'écoulement (96).

5. Dispositif selon l'une des revendications 1 à 4, **caractérisé par** la présence de plusieurs appareils de filtration (62) équipés, respectivement, d'au moins une unité de filtration (64).

6. Dispositif selon la revendication 5, **caractérisé par le fait que** chaque appareil de filtration (62) compte au moins deux unités de filtration (64).

7. Installation dévolue au traitement de surfaces d'objets, en particulier de carrosseries (4) de véhicules, comprenant
a) une cabine de revêtement (2), à travers laquelle peut être guidé un courant d'air qui prélève et évacue un excédent de pulvérisation engendré ;
b) un dispositif de séparation (48) auquel ce courant d'air peut être délivré, et dans lequel au moins une majeure partie des substances solides est dissociée d'avec ledit excédent de pulvérisation,
**caractérisée par le fait que**
c) le dispositif de séparation (48) est réalisé en conformité avec l'une des revendications 1 à 6.

8. Installation selon la revendication 7, **caractérisée par** la présence d'une chambre de dissociation (50) dans laquelle l'air de cabines, chargé d'excédent de pulvérisation, peut être introduit et à partir de laquelle ledit air de cabines, chargé d'excédent de pulvérisation, afflue dans un ou plusieurs élément(s) filtrant(s) (78) occupant son (leur) emplacement de filtration.

9. Installation selon la revendication 8, **caractérisée par** la présence d'au moins un espace technique (58, 60) séparé d'avec la chambre de dissociation (50) par l'intermédiaire d'une cloison séparatrice (52, 54), et à partir duquel il est possible d'accéder à un élément filtrant (78) occupant son emplacement d'échange.

10. Installation selon l'une des revendications 7 à 9, **caractérisée par le fait que** l'axe de rotation (114) d'une ou plusieurs unité(s) de filtration (64) s'étend verticalement ou horizontalement.
